# EUROPEAN PATENT SPECIFICATION

(11) **EP 0 704 253 B1**
(45) Date of publication and mention of the grant of the patent: **30.08.2000**
(21) Application number: 95202590.6
(22) Date of filing: 26.09.1995
(51) Int. Cl.: B07B 1/14, A01D 17/06

(54) **Method and apparatus for conveying and cleaning bulbous and tuberous plants, and a lifter comprising such apparatus**
Verfahren und Vorrichtung zum Fördern und Reinigen von Knollen- und Wurzelgewächsen, une eine solche Vorrichtung aufweisende Erntemaschine
Procédé et dispositif pour la transport et le nettoyage de plantes bulbeuses et tubéreuses, et récolteuse comportant un tel dispositif

(30) Priority: 27.09.1994 NL 9401573
(43) Date of publication of application: 03.04.1996
(73) Proprietor: Konstruktie- en Machinebouw van Dijke Zeeland B.V., 4675 PZ St. Philipsland (NL)
(72) Inventor: Van Dijke, D., NL - 4675 AZ St. Philipsland (NL)
(74) Representative: Smulders, Theodorus A.H.J., Ir.

(56) References cited:
- EP-A- 0 114 665
- DE-A- 2 140 371
- FR-A- 2 331 272
- GB-A- 2 239 156
- US-A- 2 867 322

## Description

This invention relates to a method for conveying and cleaning bulbous and tuberous plants such as potatoes, whereby bulbs or tubers are supplied to the upper end of a slightly inclined conveying surface by means suitable therefor, the conveying surface comprising parallel rollers drivable for rotation about their longitudinal axis and having a substantially unprofiled surface, with pairs of adjacent rollers forming a carrying groove in which the tubers can be carried, the rollers are driven for rotation, in such a manner that adjacent rollers always rotate in opposite directions, and the tubers are guided to the lower end of the conveying surface by the rotating rollers and are simultaneously stripped of adherent dirt by the rollers. Such a method is known from practice.

To facilitate the description, only potatoes will be mentioned as bulbous and tuberous plants.

In the known method, which is for instance practised in lifters for potatoes, the potatoes are fed onto an inclined conveying surface at the upper end thereof, this conveying surface consisting of parallel rollers which are continuously driven for rotation, with pairs of adjacent rollers being driven in opposite directions. Depending on the continuous direction of rotation of the rollers, potatoes disposed in a V-shaped groove defined by the relevant adjacent rollers are either lifted and possibly deposited in an adjacent groove, or pushed towards the underside of the groove in that the rollers rotate in the direction of the underside of the groove.

During the continuous rotation of the rollers, due to the friction between the rollers and the potatoes or the adherent dirt such as clay or earth, the potatoes are stripped of at least a part of that dirt, which is discharged downwards between the rollers. As a result of the inclination of the conveying surface, during normal use the potatoes are moreover guided in the direction of the lower ends of the rollers. However, if for instance a relatively solid lump or a stone ends up between the rollers or, for instance, an elongate object is deposited in the longitudinal direction of the groove, potatoes disposed in the same groove are no longer conveyed downwards because they cannot pass the object in question which is stationary with respect to the groove and the conveying surface. As a result, the conveying action of the apparatus is adversely affected and moreover there is a risk of the potatoes being damaged.

In order to overcome the above conveyance problem, previously a method has been proposed which utilizes adjacent rollers which alternately have an at least substantially smooth outer surface and a spiral outer surface. The rollers with the spiral outer surface then function as conveyor screws. Two adjacent rollers form a carrying groove through which the potatoes, mainly as a result of the rotation of the spiral rollers, are conveyed to the lower end of the conveying surface. Any dirt on the potatoes, such as adherent clay and earth, is scraped off the potatoes by the rollers, in particular due to the friction developing between the potatoes or the dirt and the rollers, and due to the profile of the spiral rollers knocking against the potatoes, and then discharged downwards between the rollers.

In this known method, the potatoes are positively advanced in the direction of the lower end of the conveying surface, but there is a risk of the potatoes being damaged severely, in particular by the profiled conveyor rollers.

The object of the invention is to provide a method of the type described in the preamble, by which the above-mentioned disadvantages are avoided, while the advantages are maintained. To that end, the method according to the invention is characterized by the features according to claim 1.

The use of relatively unprofiled rollers prevents the possibility of the potatoes being damaged by the rollers. The potatoes are cleaned by the friction only, that is, the brushing action that arises. By virtue of the rollers rotating alternately in one direction and the other, any objects caught between the rollers, such as for instance non-rolling objects, solid lumps and stones, are loosened upon reversal of the direction of rotation and, together with the potatoes disposed in the carrying groove in question, are at least temporarily brought into a completely or substantially floating position relative to the conveying surface. In the process, due to gravity and the movements of the rollers, they are passed to some extent in the direction of the lower end of the conveying surface. Moreover, upon reversal of the direction of rotation of the rollers, the potatoes and any dirt can be thrown into another, adjacent groove, whereby they are likewise passed to some extent in the direction of the lower ends of the rollers. As a result, the potatoes follow either a straight or, for instance, a substantially zigzag path over the conveying surface and are simultaneously cleaned thoroughly, without the potatoes being damaged, while moreover objects on the conveying surface are prevented from interfering with the conveying action.

The invention further relates to an apparatus for conveying and cleaning bulbous or tuberous plants, suitable in particular for practising a method according to the invention. This apparatus is characterized, in accordance with the invention, by the features according to claim 6.

The invention moreover relates to a lifter or harvester for bulbs or tubers, in particular a potato lifter, which lifter comprises an apparatus according to the invention and/or is arranged for practising a method according to the invention.

To clarify the invention, an exemplary embodiment of an apparatus and a method are described with reference to the drawings.
Fig. 1 shows a front view of a conveying and cleaning apparatus for bulbous and tuberous plants, in particular potatoes, with a potato in a first position;
Fig. 2 shows in front view the apparatus according to Fig. 1, with the potato displaced to some extent; and
Fig. 3 shows in side elevation the apparatus according to Fig. 1.

In the drawing a part of a potato harvester is shown, with supply means 1 for the potatoes 2, which are lifted from a field by means not shown. The supply means 1 are depicted as a bar conveyor. The supply means 1 connect to the upper end 3 of an inclined conveying surface 4 which will be further explained hereinafter. Connecting to the lower end 5 of the conveying surface 4 are suitable discharge means 6 for potatoes, for conveyance of the potatoes, for instance to a collecting vehicle, not shown in the drawing.

The conveying surface is made up of a number of rollers (nine in the drawing) 7¹ - 7⁹, extending at least substantially parallel to each other. Adjacent its upper end 3 and its lower end 5, each roller 7 is rotatably suspended in suitable bearings 9 through a rotary pin 8 extending in the longitudinal direction of the roller. Accordingly, the rollers 7 extend substantially parallel to the direction of inclination of the conveying surface 4. The outer surface 10 of each roller is substantially unprofiled and between two adjacent rollers 7¹, 7² a gap 11 has been left clear. Accordingly, pairs of adjacent rollers 71, 72 form a V-shaped carrying groove 12, open towards the underside 13 of the conveying surface 4 due to the gap 11. In the embodiment shown in the drawing, the conveying surface therefore comprises eight carrying grooves 12¹ - 12⁸. It is noted that in some cases the rollers 7 may also wholly or partly abut each other.

The rollers 7 are drivable for rotation by drive means 14 which in the embodiment shown in the drawing are connected to the rollers adjacent the upper end 3 of the conveying surface 4. These drive means 14 comprise, for instance, a gear or belt drive 15, adapted for rotating two adjacent rollers 7¹, 7² in opposite directions. In addition, reversing means 16 are included for the oscillatory drive of the rollers 7. The operation of these means will be further elucidated hereinafter. The drive means 14 can be connected, for instance via a conventional coupling shaft, to the output shaft of a tractor vehicle, not shown, or be provided with an autonomous drive, for instance a diesel or petrol engine or an electric motor.

The spacing of the bearings 9 of the rollers 7 transversely to the direction of the inclination of the conveying surface 4 is adjustable in that the bearing supports 17 are secured in slotted holes or on a tooth track. Thus the width of each gap 11 between two rollers 7 can be set depending on the crop to be processed and the extent of fouling thereof. In addition, at at least one of the ends 3, 5 of the conveying surface 4, the bearing supports 17 can be adjusted in vertical direction, enabling adjustment of the angle of inclination of the conveying surface relative to the horizontal.

An apparatus according to the invention can be used as follows.

Suitable rollers 7 are chosen depending on the product to be processed. In the case of large products, rollers 7 of a relatively large diameter will be used and a relatively large width of the gap 11 will be set, while in the case of smaller products thinner rolls 7 will be used and narrower gaps 11 will be set. Moreover, in the case of strongly fouled and/or relatively firm products, rollers 7 with a slightly rough surface 10, for instance rubber rollers, can be used and in the case of relatively clean and/or easily damaged products, rollers with a smooth surface 10, for instance steel rollers, can be used. For instance, stainless steel rollers can be used, in particular because of their good corrosion resistance. Further, rollers with different surfaces can be combined.

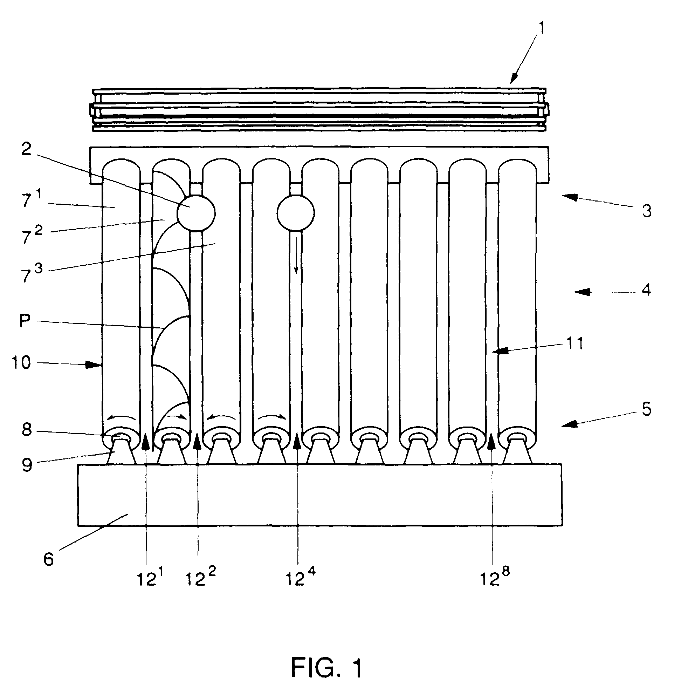

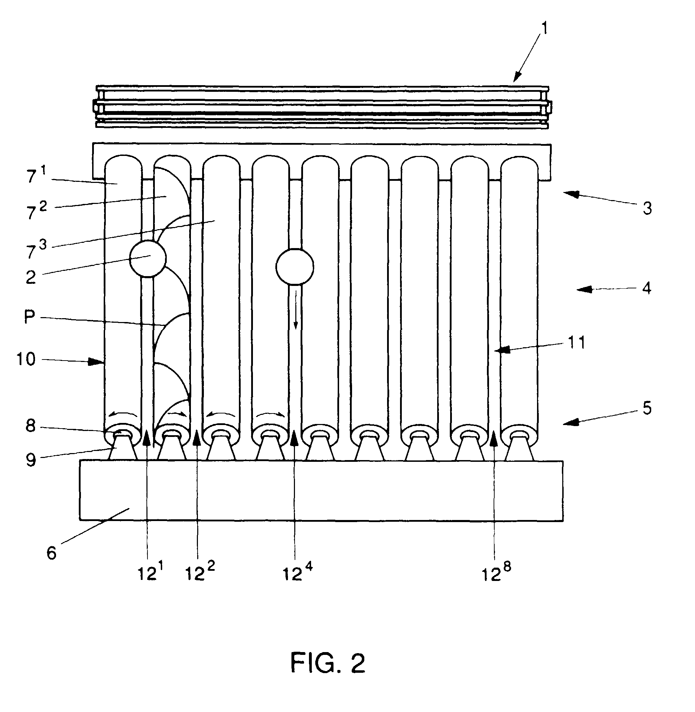

The rollers 7 are driven for rotation by means of the drive means 14, with the gearbox 15 being of such design that adjacent rollers always rotate in opposite directions. If the left-most roller 7¹ in the drawing rotates counterclockwise (Fig. 1), the second roller 7² rotates clockwise, the third roller 7³ counterclockwise, etcetera. Further, the reversing means 16 drive the rollers 7¹-7⁹ for oscillation. This means that the rollers are first rotated through a particular turn in a first direction (Fig. 1) and then through a particular turn, preferably the same turn, in the opposite direction (Fig. 2). The turn made by the rollers 7 is adjustable with the aid of the drive means, and is preferably more than 360°, for instance four or five complete revolutions in either direction.

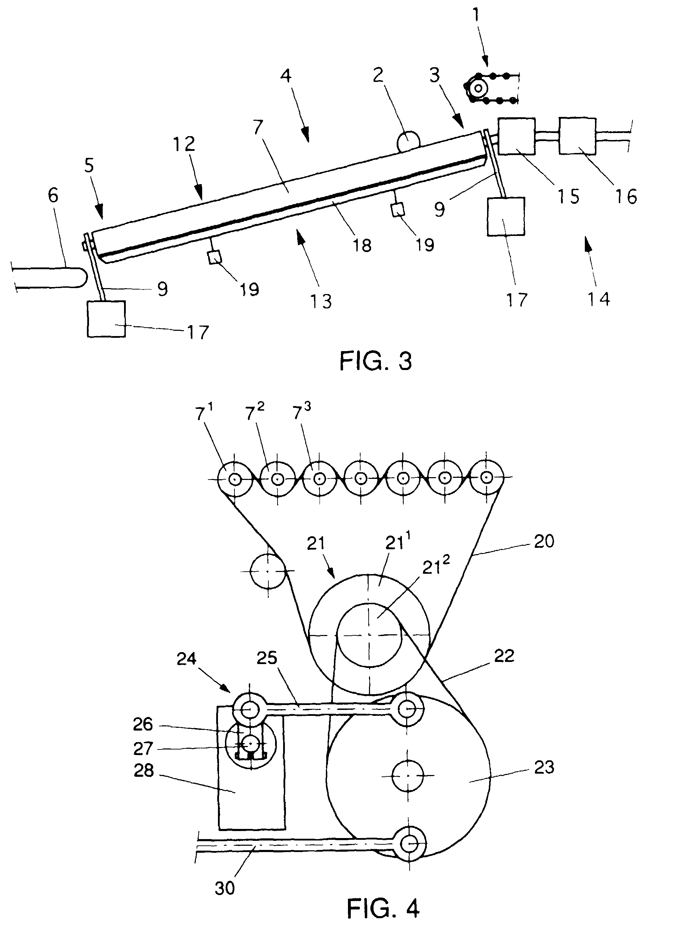

For the drive of the rollers 7, drive means 14 are provided, which, in the embodiment shown in Fig. 4, comprise a belt drive 15 and a reversing device 16. A drive belt 20, preferably a toothed belt, extends alternately along the top of a first roller 7¹, the underside of the adjacent second roller 7², the top of an adjacent third roller 7³, etcetera. The belt 20 drives, for instance, seven rollers. The belt 20 further extends along a blade 21¹ of a multi-bladed first drive wheel 21 which, via a second drive belt 22, preferably a chain, over a second sheet 21² is driven by a second drive wheel 23. The second drive wheel 23 is driven via a crank mechanism 24 by a continuously running motor 28. The crank mechanism 24 comprises a first, relatively long shaft 25 having one end connected to the second drive wheel 23 and the other end to a first end of a second, relatively short shaft 26 which has its other end connected to the motor shaft 27 continuously drivable for rotation. The length of the short shaft 26 is less than the radius of the second drive wheel 23. The belt 20 is tensioned by a tensioning wheel 29.

As a result of the rotation of the motor shaft 27, the short shaft 26 of the crank mechanism is rotated at a substantially continuous angular speed. Via the long shaft 25 the second drive wheel 23 is thereby moved. Due to the short shaft 26 being shorter than the radius of the drive wheel 23, the second drive wheel 23 swings back and forth between two extreme positions less than 360° apart relative to the axis of rotation of the second drive wheel. Via the first 20 and the second drive belt 22, the rollers 7 are thereby brought into a back-and-forth movement. The ratio between the diameters of the rollers 7, the blades 21¹, 21² of the first drive wheel 21, the diameter of the second drive wheel 23 and the lengths of the long 25 and short shaft 26 of the crank mechanism then determine the number of turns the rollers make during each back or forth movement of the second drive wheel 23. These ratios can be adjusted, for instance by exchanging rollers 7, drive wheels 21 or blades thereof and/or shafts 25, 26 of the crank mechanism 24.

Via a coupling shaft 30 the movements of the second drive wheel 23 can be transmitted to a similar apparatus, not shown in the drawing, by coupling it to a further second drive wheel. In this coupled apparatus, the motor 28 and the crank mechanism 24 can then be omitted and by an appropriate choice of dimensions synchronously moving rollers 7 are obtained. Thus, series of rollers can be driven. Of course, many other alternative embodiments are possible.

In a state fouled with, for instance, sand, clay and possibly stones and the like, potatoes 2 are thrown onto the conveying surface 4 adjacent the upper end thereof by means of the supply means 1 and divide over the carrying grooves 12¹-12⁸. The potatoes 2 are then entrained by the rollers 7 in the direction of a gap 11 in a carrying groove 12, which is defined by two adjacent rollers 7 moving in the direction of the underside of the V-shaped carrying groove 12 in question. In Fig. 1 they are, viewed from the left, the second 12², fourth 12⁴, sixth 12⁶ and eighth carrying groove 12⁸, in Fig. 2 the first 12¹, third 12³, fifth 12⁵, and seventh carrying groove 12⁷. For convenience, the description will be limited to the three leftmost rollers 7¹, 7², 7³ in Figs. 1 and 2 and the two carrying grooves 12¹, 12² formed between them.

A potato 2 fouled with clay, for instance, has been fed into the right-hand carrying groove 12² (Fig. 1) adjacent the upper end of the conveying surface 4 and is carried therein by the rollers 7², 7³. Because the rollers rotate, they remove the clay from the potato as a result of the friction developed between the clay and the rollers, and entrain the clay towards and through the gap 11 at the bottom of the carrying groove 12², so that the clay can be readily discharged. Lumps and the like that fall into the same groove 12² are either squeezed by the rollers 7², 7³ and discharged through the gap 11, or carried in the carrying groove 12² like the potatoes 2.

After the rollers 7 have rotated through a number of turns in one direction, the reversing means 16 reverse the direction of rotation, so that the potatoes 2 are carried from the second carrying groove 12² by, and possibly over, the second roller 7² into the first carrying groove 12¹. The potatoes can move substantially straight down, as shown in Figs. 1 and 2 in the fourth carrying groove 12⁴ from the left, or they can traverse a substantially zigzag path P, as shown on the left in Figs. 1 and 2. For convenience, hereinafter only the zigzag path P is described.

The potatoes 2 and stones and the like, if any, come completely or substantially clear of the rollers 7 upon reversal of the direction of rotation of the rollers 7, as a result of which they move readily, inter alia under the influence of gravity. Owing to the conveying surface 4 being arranged at an inclination, the potatoes 2 thereby move to some extent in the longitudinal direction of the first 7¹ and the second roller 7² in the direction of the lower end 5 of the conveying surface 4. In the first carrying groove 12¹ the potatoes 2 are further cleaned until the direction of rotation of the rollers is reversed again and the potatoes are returned to the second carrying groove 12². As a consequence of this method, the potatoes 2 follow a substantially zigzag path P over the conveying surface 4 in the direction of the lower end 5, while dirt is removed from the potatoes and discharged through the gaps 11. It is noted that the course of the path P naturally depends on all kinds of other factors, such as the degree of filling of the conveying surface, the extent of engagement of the potatoes by the rollers, the shape and dimensions of the potatoes, the extent of fouling of the rollers and the potatoes and the like. The path P may therefore have a variety of forms other than straight or zigzag.

The oscillating motion of the rollers 7 prevents, for instance, a stone from getting "caught" between the rollers and coming to a substantial standstill relative to the conveying surface. A stone or like object is discharged in corresponding manner to the potatoes, so that the processing of potatoes over the conveying surface is not subject to stagnation and damage to the potatoes is prevented, while the potatoes are yet cleaned in optimum manner.

Adjustment of the angle of inclination of the conveying surface 4 enables control of the distance over which the potatoes are passed over the conveying surface in the direction of the lower end 5 upon each reversal of the direction of rotation. Adjustment of the turn made by the rollers in either direction as well as of the speed of rotation enables control of the time during which the potatoes are cleaned. The greater the turn, the longer the cleaning time, the higher the speed, the greater the cleaning power. Further, variation of the width of the gap or the width of the carrying groove then enables control of the force which is then exerted on the potatoes by the rollers: if the carrying groove 12 is relatively narrow with respect to the potato 2, the potato is barely contained in the groove and only a lower part of the potato will be engaged by the rollers, while in the case of a relatively wide groove 12 the potato can be engaged from the sides. Furthermore, means may be included for setting a maximum drive power in order to prevent damage to the rollers owing, for instance, to a stone between the rollers. This may moreover prevent a potato from being engaged too roughly and damaged.

It may be advantageous to arrange the rollers 7 in the conveying surface 4 in such a manner that the longitudinal axes 8 of two adjacent rollers include an acute angle, in such a manner that the gap 11 is narrower at the lower end 5 of the conveying surface 4 than it is at the upper end 3. As a result, potatoes disposed at the upper end of the conveying surface 4, which are fouled to a greater extent and hence are relatively thick, are subject to more force for cleaning them than are potatoes disposed lower on the conveying surface, which are cleaner. Advantageously, the rollers 7 adjacent the outer sides of the conveying surface can be bearing-mounted at a slightly higher level than are the intermediate rollers 7. Thus the potatoes 2 are simply protected from falling laterally off the conveying surface.

By alternating rollers 7 of different roughnesses in the conveying surface (for instance rollers 7¹, ³, ⁵, ⁷, ⁹ of relatively smooth metal, the others of rougher rubber), the zigzaggy path P over the conveying surface 4 desired for the potatoes is substantially fixed, since the potatoes 2 will be principally entrained by the rougher rollers. Moreover, the potatoes 2 in the carrying grooves 12 are then caused to rotate approximately transversely to the direction of the inclination of the conveying surface 4 inasmuch as the rougher roller engages the dirt on the potatoes better than the smoother roller does, so that in such cases an even better cleaning is obtained.

For the purpose of cleaning the rollers 7 during, prior or after use, a scraper 18 is arranged along the underside 13 of each roller in the longitudinal direction thereof, which scraper 18 extends throughout the length of the roller, approximately centrally under the centerline of the roller 7 in question. The distance between the scraper 18 and the outer surface 10 of the roller is adjustable by means of adjusting means 19, such as for instance set bolts. During the rotation of the rollers 7, dirt on the rollers that is thicker than the width of the gap between a scraper 18 and the roller 7ⁿ in question is simply scraped off the roller by the scraper 18, so that the dirt drops. It is noted that the rollers 7 may instead or additionally be rinsed or sprayed clean with water or the like.

The invention is not in any way limited to the embodiments shown in the drawing and described in the description by way of example only. Many variations are possible. For instance, the description mentions only potatoes as bulbous or tuberous crops, but naturally many other crops can be processed with a method and apparatus according to the invention. Moreover, such an apparatus or method can also be used, for instance, with crops that are supplied from a bunker or silage pit or in different apparatuses. The rollers may be provided with a brush-shaped surface and the bristles may to some degree extend in the direction of the lower end of the conveying surface for the purpose of a better advancement of the potatoes. In this embodiment the potatoes can also be conveyed over a substantially horizontal surface or even up a slope. The rollers can be composed of all kinds of suitable materials. The number of rollers in the conveying surface, the length thereof and the diameter can be chosen as desired and even during use be adjusted depending on the circumstances.

The drive means can be designed in different ways, obvious to those skilled in the art. For instance, use can be made of gear, rope and/or belt transmission, link systems and different kinds of drives. For instance, each roller may be equipped with a gear wheel adjacent the upper end, with the gear wheels of the rollers meshing in pairs. Each pair of rollers is driven by a drive wheel of the reversing device, meshing, for instance, with the left-hand gear wheel. When reversing the direction of rotation, the drive wheel is shifted, in such a manner that the drive wheel disengages and is then engaged with a right-hand gear wheel of an adjacent pair of gear wheels. As a result, the direction of rotation of the rollers is reversed. Further, the various adjusting and control functions can be controlled both electronically and mechanically. These and many other modifications are understood to fall within the scope of the invention.

## Claims

1. A method for conveying and cleaning bulbous and tuberous plants (2) such as potatoes, whereby bulbs or tubers (2) are supplied to the upper end (3) of a slightly inclined conveying surface (4) by means (1) suitable therefor, the conveying surface (4) comprising parallel rollers (7) drivable for rotation about their longitudinal axis and having a substantially unprofiled surface (10), with pairs of adjacent rollers (7) forming a carrying groove (12) in which the tubers can be carried, the rollers (7) are driven for rotation, in such a manner that adjacent rollers (7) always rotate in opposite directions, and the tubers (2) are guided to the lower end (5) of the conveying surface (4) by the rotating rollers (7) and are simultaneously stripped of adherent dirt by the rollers (7), characterized in that the rollers (7) are driven for oscillation, through a number of degrees to the left and then through a number of degrees to the right, whereby the rollers (7) upon inversion of the direction of rotation, cause the tubers (2) to move slightly upwards from a carrying groove (12) and possibly to an adjacent carrying groove (12), and the tubers (2) are simultaneously moved in the direction of the lower end (5) of the conveying surface (4), while dirt is removed from the tubers (2) by the rollers (7) and is urged through the underside (11) of the carrying grooves (12).

2. A method according to claim 1, characterized in that the angular displacement of the rollers (7) is set depending on the nature and size of the tubers (2) to be cleaned and the nature and extent of fouling thereof, all this in such a manner that the tubers (2) are urged by two adjacent rollers (7) in the direction of the underside (11) of the carrying groove (12) formed between said two adjacent rollers (7) for such a time that the desired cleaning is obtained by friction between the rollers (7) and the tubers (2) without the tubers thereby being damaged.

3. A method according to any one of the preceding claims, characterized in that the rollers (7) are rotated through at least 360° in either direction, with the angular displacement of each roller (7) being equal to the angular displacement of the other rollers.

4. A method according to any one of the preceding claims, characterized in that the spacing of the rollers (7) is set depending on the nature and size of the tubers (2) to be cleaned and the nature and extent of fouling thereof, all this in such a manner that the tubers (2) can be carried in the carrying grooves (12), to a depth sufficient for contaminations to be scraped off their circumferential surface, without the tubers (2), whether or not in cleaned condition, slipping through the rollers (7).

5. A method according to any one of the preceding claims, characterized in that the tubers (2) are lifted from a field and are supplied substantially directly to the upper end (3) of the conveying surface (4).

6. An apparatus for conveying and cleaning bulbous or tuberous plants (2), which apparatus comprises an inclined conveying surface (4) which comprises a number of parallel rollers (7) having a substantially unprofiled surface (10), the rollers (7) being bearing-mounted (8) for rotation about their longitudinal axis and the longitudinal axes extending approximately parallel to the direction of inclination of the conveying surface (4), with means (14) being included for driving the rollers for rotation, the rollers (7) being arranged such that between the rollers (7) slightly V-shaped carrying grooves (12) are defined which can at least partly be open at the underside (11), the drive means (14) for the rollers being adapted for driving two adjacent rollers (7) in opposite directions during use, characterized in that the drive means (14) for the rollers (7) are adapted for driving the rollers for oscillation, the arrangement being such that the rollers (7) are alternately drivable through at least a part of a revolution and preferably through a number of revolutions in a first direction and are then drivable in the opposite direction.

7. An apparatus according to claim 6, characterized in that adjusting means are included for controlling at least the maximum turn of the rollers (7) during each oscillation.

8. An apparatus according to claim 6 or 7, characterized in that means are included for controlling the driving speed of the rollers.

9. An apparatus according to any one of the preceding claims 6-8, characterized in that means are included for setting the spacing between the rollers (7).

10. An apparatus according to any one of claims 6-9, characterized in that means are included for adjusting the angle of inclination of the conveying surface.

11. An apparatus according to any one of claims 6-10, characterized in that the rollers (7) are provided with at least a rubber or metal surface (10).

12. An apparatus according to any one of claims 6-11, characterized in that means are provided for setting the maximum drive power of the rollers (7).

13. An apparatus according to any one of claims 6-12, characterized in that the longitudinal axes of two adjacent rollers (7) include an acute angle.

14. An apparatus according to any one of claims 6-13, characterized in that the conveying surface (4) is slightly concave transversely to the direction of the inclination.

15. A lifter for bulbs or tubers, in particular a potato lifter, which lifter comprises an apparatus according to any one of claims 6-14 or is arranged for practising a method according to any one of claims 1-5.

## Patentansprüche

1. Verfahren zum Fördern und Reinigen von zwiebel- und knollenförmigen Pflanzen (2), wie Kartoffeln, bei dem die Zwiebeln oder Knollen (2) dem oberen Ende (3) einer geringfügig geneigten Förderfläche (4) durch hierfür geeignete Einrichtungen (1) zugeführt werden, wobei die Förderfläche (4) parallele Rollen (7) aufweist, die um ihre Längsachse drehend antreibbar sind und eine im wesentlichen profillose Oberfläche (10) haben, wobei Paare benachbarter Rollen (7) eine Tragrille (12) bilden, in der Knollen getragen werden können, wobei die Rollen (7) derart drehend angetrieben werden, daß benachbarte Rollen (7) stets in entgegengesetzten Richtungen drehen und die Knollen (2) von den drehenden Rollen (7) zum unteren Ende (5) der Förderfläche (4) geführt und von den Rollen (7) gleichzeitig von anhaftendem Schmutz gereinigt werden, dadurch gekennzeichnet, daß die Rollen (7) hin und her drehend um mehrere Winkelgrade nach links und anschließend über mehrere Winkelgrade nach rechts gedreht werden, wodurch die Rollen (7) bei der Umkehr der Drehrichtung bewirken, daß sich die Knollen (2) aus einer Tragrille (12) geringfügig nach oben und möglicherweise in eine benachbarte Tragrille (12) bewegen, und die Knollen (2) gleichzeitig in Richtung des unteren Endes (5) der Förderfläche (4) bewegt werden, während die Rollen (7) Schmutz von den Knollen (2) entfernen, der durch die Unterseite (11) derTragrillen (12) gedrückt wird.

2. Verfahren nach Anspruch 1, dadurch gekennzeichnet, daß die Winkelverschiebung der Rollen (7) entsprechend der Art und der Größe der zu reinigenden Knollen (2) und der Art und dem Ausmaß des Faulens derselben eingestellt wird, und zwar derart, daß die Knollen (2) von zwei benachbarten Rollen (7) in Richtung der Unterseite (11) der zwischen zwei benachbarten Rollen (7) gebildeten Tragrille (12) über einen derartigen Zeitraum gedrückt werden, daß die gewünschte Reinigung durch Reibung zwischen den Rollen (7) und den Knollen (2) erreicht wird, ohne dabei die Knollen zu beschädigen.

3. Verfahren nach einem der vorhergehenden Ansprüche, dadurch gekennzeichnet, daß die Rollen (7) um wenigstens 360° in beiden Richtungen gedreht werden, wobei die Winkelverschiebung jeder Rolle (7) gleich der Winkelverschiebung der anderen Rollen ist.

4. Verfahren nach einem der vorhergehenden Ansprüche, dadurch gekennzeichnet, daß der Abstand zwischen den Rollen (7) entsprechend der Art und der Größe der zu reinigenden Knollen (2) und der Art und dem Ausmaß des Faulens derselben derart eingestellt wird, daß die Knollen (2) in den Tragrillen (12) getragen werden können, und auf eine Tiefe eingestellt wird, die ausreicht, Kontaminationen von deren Umfangsfläche abzuschaben, ohne daß die Knollen (2), seien sie gereinigt oder nicht, zwischen den Rollen hindurch rutschen.

5. Verfahren nach einem der vorhergehenden Ansprüche, dadurch gekennzeichnet, daß die Knollen (2) von einem Feld aufgenommen und im wesentlichen direkt dem oberen Ende (3) der Förderfläche (4) zugeführt werden.

6. Vorrichtung zum Fördern und Reinigen von zwiebel- und knollenförmigen Pflanzen (2), mit einer geneigten Förderfläche (4), die mehrere parallele Rollen (7) mit im wesentlichen profilloser Oberfläche (10) aufweisen, wobei die Rollen (7) um ihre Längsachse drehbar gelagert (8) sind und die Längsachsen ungefähr parallel zur Neigungsrichtung der Förderfläche (4) verlaufen, wobei eine Einrichtung (14) zum drehenden Antreiben der Rollen vorgesehen ist, wobei die Rollen (7) derart angeordnet sind, daß zwischen den Rollen (7) geringfügig V-förmige Tragrillen (12) gebildet sind, die zumindest teilweise an der Unterseite (11) offen sein können, wobei die Antriebseinrichtung (14) für die Rollen geeignet ist, im Betrieb zwei benachbarte Rollen (7) in entgegengesetzte Richtungen zu treiben, dadurch gekennzeichnet, daß die Antriebseinrichtung (14) der Rollen (7) geeignet ist, die Rollen oszillierend zu treiben, wobei die Rollen (7) abwechselnd über wenigstens einen Teil einer Umdrehung und vorzugsweise über mehrere Umdrehungen in eine erste Richtung und anschließend in die entgegengesetzte Richtung antreibbar sind.

7. Vorrichtung nach Anspruch 6, dadurch gekennzeichnet, daß eine Einstelleinrichtung zum Regeln wenigstens der maximalen Umdrehung der Rollen (7) während jeder Oszillation vorgesehen ist.

8. Vorrichtung nach Anspruch 6 oder 7, dadurch gekennzeichnet, daß Einrichtungen zum Regeln der Antriebsgeschwindigkeit der Rollen vorgesehen sind.

9. Vorrichtung nach einem der vorhergehenden Ansprüche 6 - 8, dadurch gekennzeichnet, daß eine Einrichtung zum Einstellen des Abstands zwischen den Rollen (7) vorgesehen ist.

10. Vorrichtung nach einem der vorhergehenden Ansprüche 6 - 9, dadurch gekennzeichnet, daß eine Einrichtung zum Einstellen des Neigungswinkels der Förderfläche vorgesehen ist.

11. Vorrichtung nach einem der vorhergehenden Ansprüche 6 - 10, dadurch gekennzeichnet, daß die Rollen (7) wenigstens mit einer Gummi- oder Metalloberfläche (10) versehen sind.

12. Vorrichtung nach einem der vorhergehenden Ansprüche 6 - 11, dadurch gekennzeichnet, daß eine Einrichtung zum Einstellen der maximalen Antriebsleistung der Rollen (7) vorgesehen ist.

13. Vorrichtung nach einem der vorhergehenden Ansprüche 6 - 12, dadurch gekennzeichnet, daß die Längsachsen zweier benachbarter Rollen (7) einen spitzen Winkel einschließen.

14. Vorrichtung nach einem der vorhergehenden Ansprüche 6 - 13, dadurch gekennzeichnet, daß die Förderfläche (4) quer zur Neigungsrichtung geringfügig konkav ist.

15. Erntevorrichtung für Zwiebeln oder Knollen, insbesondere eine Kartoffelerntevorrichtung, die mit einer Vorrichtung nach einem der Ansprüche 6-14 versehen ist oder zum Durchführen des Verfahrens nach einem der Ansprüche 1-5 ausgebildet ist.

## Revendications

1. Procédé de transport et de nettoyage de plantes bulbeuses et tubéreuses (2), telles que les pommes de terre, selon lequel des bulbes ou des tubercules (2) sont transmis à l'extrémité supérieure (3) d'une surface légèrement inclinée (4) de transport par un dispositif (1) convenant à cet effet, la surface (4) de transport comprenant des rouleaux parallèles (7) qui peuvent être entraînés en rotation autour de leur axe longitudinal et ayant une surface pratiquement non profilée (10), des paires de rouleaux adjacents (7) formant une gorge (12) de transport dans laquelle les tubercules peuvent être transportés, les rouleaux (7) sont entraînés en rotation de manière que des rouleaux adjacents (7) tournent toujours en sens opposés, et les tubercules (2) sont guidés vers l'extrémité inférieure (5) de la surface (4) de transport par les rouleaux rotatifs (7) et subissent simultanément la séparation de saletés qui adhérent par les rouleaux (7), caractérisé en ce que les rouleaux (7) sont entraînés afin qu'ils oscillent d'un certain nombre de degrés vers la gauche puis d'un certain nombre de degrés vers la droite, si bien que les rouleaux (7), après inversion du sens de rotation, provoquent un léger déplacement vers le haut des tubercules (2) depuis une gorge de transport (12) et éventuellement vers une gorge adjacente (12) de transport, et les tubercules (2) sont déplacés simultanément dans la direction de l'extrémité inférieure (5) de la surface de transport (4), alors que la saleté est retirée des tubercules (2) par les rouleaux (7) et chassée par la face inférieure (11) des gorges de transport (12).

2. Procédé selon la revendication 1, caractérisé en ce que le déplacement angulaire des rouleaux (7) est réglé suivant la nature et la dimension des tubercules (2) à nettoyer et la nature et l'importance de leur salissure, toutes ces conditions étant déterminées afin que les tubercules (2) soient chassés par deux rouleaux adjacents (7) dans la direction de la face inférieure (11) de la gorge de transport (12) formée entre les deux rouleaux adjacents (7) pendant un temps tel que le nettoyage voulu est obtenu par frottement entre les rouleaux (7) et les tubercules (2) sans que les tubercules ne soient ainsi détériorés.

3. Procédé selon l'une quelconque des revendications précédentes, caractérisé en ce que les rouleaux (7) sont entraînés en rotation sur 360° au moins dans un sens et dans l'autre, le déplacement angulaire de chaque rouleau (7) étant égal au déplacement angulaire des autres rouleaux.

4. Procédé selon l'une quelconque des revendications précédentes, caractérisé en ce que l'espacement des rouleaux (7) est réglé d'après la nature et la dimension des tubercules (2) à nettoyer et la nature et l'importance de leur salissure, toutes les conditions étant telles que les tubercules (2) peuvent être transportés dans les gorges de transport (12) à une profondeur suffisante pour que les matières contaminantes soient raclées de leur surface circonférentielle, sans que les tubercules (2), à l'état nettoyé ou non, ne glissent entre les rouleaux (7).

5. Procédé selon l'une quelconque des revendications précédentes, caractérisé en ce que les tubercules (2) sont ramassés dans un champ et sont transmis de manière pratiquement directe à l'extrémité supérieure (3) de la surface (4) de transport.

6. Appareil de transport et de nettoyage de plantes bulbeuses ou tubéreuses (2), l'appareil comprenant une surface inclinée (4) de transport qui comprend un certain nombre de rouleaux parallèles (7) ayant une surface pratiquement non profilée (10), les rouleaux (7) étant montés (8) dans des paliers afin qu'ils tournent autour de leur axe longitudinal, et leurs axes longitudinaux s'étendant en direction pratiquement parallèle à la direction d'inclinaison de la surface (4) de transport, un dispositif (14) étant incorporé afin qu'il assure l'entraînement des rouleaux en rotation, les rouleaux (7) étant disposés afin que des gorges de transport (12) ayant une forme légèrement en V soient délimitées entre les rouleaux (7) et puissent être au moins partiellement ouvertes du côté inférieur (11), le dispositif (14) d'entraînement des rouleaux étant destiné à entraîner deux rouleaux adjacents (7) en sens opposés pendant l'utilisation, caractérisé en ce que le dispositif (14) d'entraînement des rouleaux (7) est destiné à entraîner les rouleaux afin qu'ils présentent une oscillation, la disposition étant telle que les rouleaux (7) peuvent être entraînés en alternance sur au moins une partie d'un tour et de préférence un certain nombre de tours dans un premier sens, puis être entraînés dans le sens opposé.

7. Appareil selon la revendication 6, caractérisé en ce qu'un dispositif d'ajustement est incorporé afin qu'il règle au moins la rotation maximale des rouleaux (7) à chaque oscillation.

8. Appareil selon la revendication 6 ou 7, caractérisé en ce qu'un dispositif est incorporé afin qu'il règle la vitesse d'entraînement des rouleaux.

9. Appareil selon l'une quelconque des revendications précédentes 6 à 8, caractérisé en ce qu'un dispositif est incorporé afin qu'il règle l'espacement des rouleaux (7).

10. Appareil selon l'une quelconque des revendications 6 à 9, caractérisé en ce qu'un dispositif est incorporé afin qu'il ajuste l'angle d'inclinaison de la surface de transport.

11. Appareil selon l'une quelconque des revendications 6 à 10, caractérisé en ce que les rouleaux (7) comportent au moins une surface métallique ou de caoutchouc (10).

12. Appareil selon l'une quelconque des revendications 6 à 11, caractérisé en ce qu'un dispositif est destiné à régler la puissance maximale d'entraînement des rouleaux (7).

13. Appareil selon l'une quelconque des revendications 6 à 12, caractérisé en ce que les axes longitudinaux de deux rouleaux adjacents (7) forment un angle aigu inclus.

14. Appareil selon l'une quelconque des revendications 6 à 13, caractérisé en ce que la surface (4) de transport est légèrement concave transversalement à la direction d'inclinaison.

15. Ramasseuse de bulbes ou de tubercules, en particulier ramasseuse de pommes de terre, la ramasseuse comprenant un appareil selon l'une quelconque des revendications 6 à 14 ou étant destinée à la mise en oeuvre d'un procédé selon l'une quelconque des revendications 1 à 5.
